Europäisches Patentamt

European Patent Office

Office européen des brevets

(19)

(11) Veröffentlichungsnummer: **0 408 020 A2**

## (12) EUROPÄISCHE PATENTANMELDUNG

(21) Anmeldenummer: **90113306.6**

(22) Anmeldetag: **12.07.90**

(51) Int. Cl.5: **B29B 7/00**, B01F 7/00, B01F 15/00, G05D 21/00

(30) Priorität: **14.07.89 DE 3923381**

(43) Veröffentlichungstag der Anmeldung:
**16.01.91 Patentblatt 91/03**

(84) Benannte Vertragsstaaten:
**AT BE CH DE DK ES FR GB GR IT LI LU NL SE**

(71) Anmelder: **DEUTSCHES INSTITUT FÜR KAUTSCHUKTECHNOLOGIE e.V.**
**Eupener Strasse 33**
**D-3000 Hannover 81(DE)**

(72) Erfinder: **Badura, Reiner Dr.-Ing.,**
**Dt.Inst.Kautschuktechn.**
**Eupener Strasse 33**
**D-3000 Hannover 81(DE)**
Erfinder: **Friedl-Haarde, Susanne, Dipl.-Phys.**
**Dt.Inst.Kaut.**
**Eupener Strasse 33**
**D-3000 Hannover(DE)**
Erfinder: **Prill, Volker, c/o Dt. Inst.für**
**Kautschuktechn.**
**Eupener Strasse 33**
**D-3000 Hannover 81(DE)**
Erfinder: **Friedl, Richard, Prof.Dr.-Ing.**
**Ratsbleiche 8**
**D-3300 Braunschweig(DE)**
Erfinder: **Seyfried, Peter, Prof.Dr.**
**Otto-Hahn-Strasse 23**
**D-3300 Braunschweig(DE)**

(74) Vertreter: **Thömen, Uwe, Dipl.-Ing.**
**Patentanwalt U. Thömen Zeppelinstrasse 5**
**D-3000 Hannover 1(DE)**

(54) **Innenmischer zur Herstellung von Kautschukmischungen.**

(57) Innenmischer zur Herstellung von Kautschukmischungen, wobei eine Meßanordnung zur Ermittlung des elektrischen Leitwertes der Kautschukmischung vorgesehen wird. Zu diesem Zweck befindet sich in der Innenwand des Innenmischers eine mit einem ersten Potential einer Gleichspannungsquelle verbundene Elektrode, und der Rotor des Innenmischers ist über einen Schleifring mit dem zweiten Potential der Gleichspannungsquelle verbunden. Somit kann zwischen der Elektrode und dem Rotor ein Strom durch die Kautschukmischung fließen, der von einem Strommeßgerät gemessen und zur Ermittlung des elektrischen Leitwertes herangezogen wird.

EP 0 408 020 A2

## INNENMISCHER ZUR HERSTELLUNG VON KAUTSCHUKMISCHUNGEN

Die Erfindung betrifft einen Innenmischer zur Herstellung von Kautschukmischungen, insbesondere Innenmischer mit ineinandergreifenden Rotoren, mit einer Meßanordnung zur Ermittlung des elektrischen Leitwertes eines Probevolumens der Ruß enthaltenden Kautschukmischung zwischen der mit einer Elektrode versehenen Innenwand des Innenmischers und dem Rotor, wobei die Meßanordnung eine Gleichspannungsquelle zur Erzeugung einer Gleichspannung zwischen einem ersten Potential, auf dem die Elektrode liegt, und einem zweiten Potential sowie ein Strommeßgerät zur Messung des durch das Probevolumen fließenden Stromes der Gleichspannungsquelle umfaßt.

Bekanntlich dienen Innenmischer dazu, eine Kautschukmischung zu erzeugen, wobei es darauf ankommt, daß diese zur Weiterverarbeitung bestimmte Kautschukmischung möglichst gleichmäßig ist. Insbesondere wird angestrebt, eine gleichmäßige Rußdispersion zu erzielen.

Die in der Praxis benutzten Innenmischer werden bislang so betrieben, daß die Gleichmäßigkeit der Mischung und insbesondere der Rußdispersion nicht meßtechnisch erfaßt wird. Vielmehr kommt es auf das Fachwissen der den Innenmischer betreibenden Bedienungsperson an, die die möglichen Steuerungsparameter von Hand so einstellt, daß nach dem eigenen Know-How eine möglichst gleichmäßige Kautschukmischung erzielt wird.

Grundsätzlich ist es zwar bekannt, daß im Wege einer Messung des Leitwertes der Kautschukmischung eine zuverlässige Aussage über die gleichmäßige Rußdispersion einer Kautschukmischung möglich ist, jedoch haben sich die entsprechenden Untersuchungen bisher stets auf meßtechnisch besonders ausgestaltete Laborversuche mit entsprechend ausgestalteten Innenmischern beschränkt. Bei industriell genutzten und von ihrem Aufbau her relativ großen Innenmischern sind Leitwertmessungen zur Bestimmung der Gleichmäßigkeit der Rußdispersion innerhalb einer Kautschukmischung bisher nicht vorgenommen worden.

Bei einem für Laborversuche besonders konstruierten und relativ klein aufgebauten Innenmischer ist vorgeschlagen worden, in der Innenwand des Gehäuses des Innenmischers eine Elektrode anzuordnen. Eine weitere Elektrode ist bei diesem Vorschlag innerhalb der äußeren Oberfläche des Mischarmes des Rotors des Innenmischers vorgesehen.

Wenn sich bei dieser vorgeschlagenen Meßanordnung die beiden Elektroden räumlich gegenüberstehen, kann der durch das zwischen den beiden Elektroden befindliche Probevolumen der Kautschukmischung fließende Strom gemessen werden, woraus sich der elektrische Leitwert bestimmen läßt.

Die soweit beschriebene Anordnung ist zwar für Laborversuche unter Zugrundelegung eines Innenmischers mit relativ kleinen Abmessungen brauchbar, allerdings läßt sie sich nicht ohne weiteres an industriell genutzten Innenmischern nachrüsten.

Vor allem die Anordnung der Elektrode des Rotors, die innerhalb einer Bohrung des Rotors verläuft, bereitet erhebliche Schwierigkeiten, weil wegen der erforderlichen Bohrung der Rotor im Vergleich zu herkömmlichen Rotoren in mechanischer Hinsicht völlig neu berechnet und ausgelegt werden muß.

Die elektrische Leitfähigkeit ist mit dem Dispersionsgrad des Rußes in der Mischung eng verknüpft. Mit Hilfe der elektrischen Leitfähgikeit kann diese Rußdispersion während des Mischprozesses verfolgt werden. Dies kann zur Optimierung und in bestimmten Fällen zur Steuerung des Mischprozesses eingesetzt werden.

Der Erfindung liegt die Aufgabe zugrunde, mit einfachen Mitteln und mit geringen Kosten bei einem Innenmischer eine Messung des elektrischen Leitwertes der Kautschukmischung durchführen zu können, ohne daß da bei kostenaufwendige Veränderungen am Rotor vorzunehmen sind. Insbesondere sollen sich bestehende Innenmischer mit dieser Meßeinrichtung ausrüsten lassen. Dieses Ziel erreicht die Erfindung bei dem im Oberbegriff des Patentanspruchs 1 angegebenen Innenmischer dadurch, daß der gesamte, aus elektrisch leitendem Material bestehende Rotor auf das zweite Potential der im Oberbegriff erwähnten Gleichspannunsquelle gelegt ist.

Die Erfindung beschreitet den überraschenden Weg, auf eine Elektrode für die Strommessung innerhalb des Rotors vollständig zu verzichten. Vielmehr wird der Rotor selbst als Elektrode ausgenutzt, indem der Rotor auf das zweite Potential der Gleichspannungsquelle gelegt ist.

In zweckmäßiger Ausgestaltung wird die Achse des Rotors über einen Schleifring mit dem zweiten Potential verbunden. Dadurch wird eine einfache Möglichkeit geschaffen, den Rotor in der mit der Erfindung verfolgten Art und Weise auf das zweite Potential zu legen.

Die andere Elektrode befindet sich in der Innenwand des Innenmischers und besteht in einer zweck mäßigen Ausgestaltung der Erfindung aus einer Mittelelektrode und einer die Mittelelektrode konzentrisch umgebenden Ringelektrode, die durch einen inneren Isolierring von der Mittelelektrode getrennt und isoliert ist. Dabei ist in vorteilhafter Weise vorgesehen, die Ringelektrode auf das gleiche erste Potential zu legen, welches auch die Mittelelektrode besitzt.

Der Vorteil dieser besonderen Elektrodenanordnung mit den gleichen Potentialen besteht darin, daß sich zwischen der Mittelelektrode und der im Verlaufe der Rotorbewegung gegenüberliegend befindlichen Oberfläche des Mischarmes des Rotors ein in etwa bestimmtes und definiertes Feldlinienbild ergibt, weil die Feldlinien der benachbarten und auf dem gleichen Potential liegenden Ringelektrode abstoßend auf die Feldlinien der Mittelelektrode wirken. Dies hat zu Folge, daß die Feldlinien der Mittelelektrode zu der gegenliegenden Oberfläche des Mischarmes des Rotors ziemlich definiert und vorherbestimmbar verlaufen.

Wegen des bestimmten Feldlinienverlaufes ergibt sich auch in etwa ein bestimmtes Probevolumen der Kautschukmischung, die von dem Strom der Gleichspannungsquelle durchflossen wird. Ein solches in etwa konstantes Probe volumen ist aber überhaupt als Voraussetzung für eine genaue und aussagekräftige Messung anzusehen.

In einer weiteren zweckmäßigen Ausgestaltung der Erfindung besitzt der Innenmischer eine Temperaturmeßeinrichtung, um die Temperatur der Kautschukmischung, insbesondere des Probevolumens, zu ermitteln. Ferner sieht eine weitere vorteilhafte Ausgestaltung vor, daß der Innenmischer zusätzlich noch mit einer Druckmeßeinrichtung zur Messung des Druckes der Kautschukmischung in dem Innenmischer, insbesondere zur Messung des Druckes im Bereich des Probevolumens, versehen ist.

Durch diese Maßnahmen wird dem Umstand Rechnung getragen, daß der elektrische Leitwert nicht nur eine Funktion der Rußdispersion der Kautschukmischung ist, sondern daneben auch noch von der Temperatur und dem Druck der Kautschukmischung im Innenmischer abhängt. Ein bestimmter maßgeblicher elektrischer Leitwert, der Auskunft darüber gibt, daß eine gleichmäßige Rußdispersion in der Kautschukmischung gegeben ist und der Mischvorgang somit abgebrochen werden kann, hängt also auch noch von der Temperatur und von dem Druck ab.

Die Möglichkeit der Messung sowohl des Druckes als auch der Temperatur gestattet daher in vorteilhafter Weise diese zusätzlichen Parameter zu berücksichtigen.

Zweckmäßig ist es, zwei Druckaufnehmer symmetrisch zur Mittelelektrode vorzusehen. In der Praxis werden die beiden Druckaufnehmer jeweils unterschiedliche Meßwerte geben, und zur Auswertung wird dann in vorteilhafter Weise ein Meßwert berücksichtigt, der im Wege einer linearen Interpolation zwischen den beiden ermittelten Meßwerten liegt. Es wird also davon ausgegangen, daß dieser interpolierte Wert den Druck im Bereich der Mittelelektrode angibt.

Die Temperaturmeßeinrichtung läßt sich in zweckmäßiger Ausgestaltung der Erfindung durch ein Thermoelement bilden, welches in einer Innenbohrung der Mittelelektrode angeordnet wird.

Sowohl das Thermoelement als auch die beiden Druckaufnehmer sind jeweils bündig abgeschlossen, so daß sich insgesamt die Innenwand des Innenmischers als eine glatte Oberfläche darstellt.

Weitere vorteilhafte Ausgestaltungen der Erfindung ergeben sich aus den Unteransprüchen und der Beschreibung.

Zum besseren Verständnis wird die Erfindung nachfolgend anhand des in der Zeichnung dargestellten Ausführungsbeispiels näher erläutert. Es zeigen:

Fig. 1 eine schematische Querschnittsansicht eines Innenmischers mit einer Meßanordnung,

Fig. 2 eine Querschnittsansicht einer Elektrode in der Innenwand des Innenmischers,

Fig. 3 eine Ansicht ähnlich Fig. 2, mit einem teilweise dargestellten Rotor und dem Feldlinienverlauf zwischen der Elektrode und dem Mischarm, und

Fig. 4 eine weitere Querschnittsansicht einer anderen Ausführungsform eines Innenmischers.

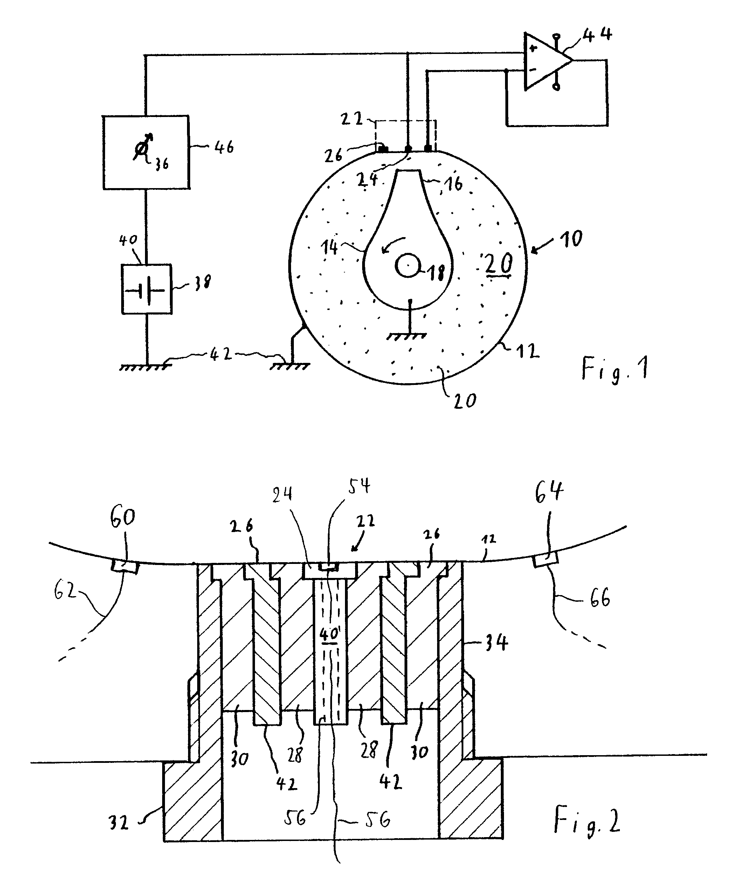

Fig. 1 zeigt einen Innenmischer 10, der zylindrisch aufgebaut ist und eine Innenwand 12 besitzt. Innerhalb des Innenmischers 10 befindet sich ein Rotor 14 mit einem Mischarm 16. Über eine Rotorachse 18 kann der Rotor in Drehung versetzt werden, um die eingefüllte Kautschukmischung 20 zu durchmischen.

In der Innenwand 12 des Innenmischers 10 befindet sich eine Elektrode 22, die in Fig. 1 zur besseren Verdeutlichung in einem vergrößerten Maßstab gezeichnet ist, und deren Aufbau sich im einzelnen aus Fig. 2 ergibt.

Die Elektrode 22 umfaßt eine Mittelelektrode 24 und eine diese Mittelelektrode 24 umgebende Ringelektrode 26. Die Mittelelektrode 24 und die Ringelektrode 26 sind durch einen inneren Isolierring 28 voneinander getrennt, und die Ringelektrode 26 ist ferner von einem äußeren Isolierring 30 umgeben.

Mit dem äußeren Isolierring 30 ist die gesamte Elektrode 22 in einem Elektrodengehäuse 32 gehalten, welches seinerseits in eine Bohrung 34 der Innenwand 12 fest eingebracht ist.

Gemäß der Darstellung in Fig. 1 ist die Mittelelektrode 24 über eine ein Strommeßgerät 36 enthaltende Meßanordnung 46 mit dem ersten Potential 40 einer Gleichspannungsquelle 38 verbunden. Das zweite Potential dieser Gleichspannungsquelle 38 liegt auf Erdpotential 42.

Über einen hier aus Gründen der Übersichtlichkeit nicht dargestellten Schleifring ist der Rotor 14 über seine Rotorachse 18 ebenfalls auf Erdpotential gelegt. Damit dient der gesamte Rotor 14 sozusagen als Gegenelektrode zu der anderen Elektrode 22 in der Innenwand 12.

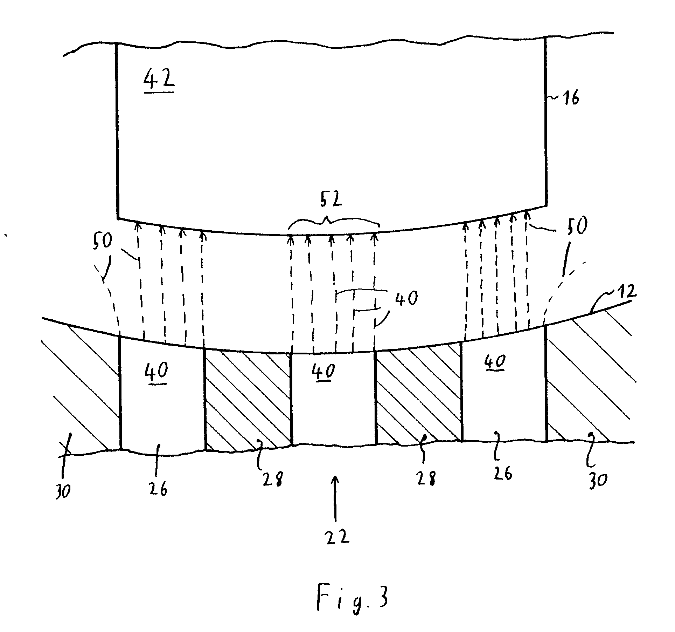

Wenn sich der Mischarm 16 des Rotors 14 während seiner Drehung gegenüber der Elektrode 22 befindet, bilden sich zwischen der Elektrode 22 einerseits und der Oberfläche des Mischarmes 16 andererseits aufgrund der unterschiedlichen Potentiale Feldlinien aus, und es findet ein Stromfluß durch die Kautschukmischung 20 hindurch statt. Dieser Feldlinienverlauf ist schematisch in Fig. 3 verdeutlicht.

Eine Besonderheit der Meßschaltung besteht darin, daß die Ringelektrode mit Hilfe eines einen hohen Innenwiderstand besitzenden Operationsverstärkers 44 auf das gleiche erste Potential 40 gehalten wird, auf dem auch die Mittelelektrode 24 liegt. Da sich gleiche Feldlinien abstoßen, ergibt sich in Fig. 3 der Effekt, daß die in der Mitte von der Mittelelektrode 24 zum Mischarm 16 verlaufenden Feldlinien sozusagen zusammengedrückt und daran gehindert werden, nach außen hin auszuweichen. Durch diesen in etwa konstanten Feldlinienverlauf ergibt sich in vorteilhafter Weise ein Stromfluß durch ein in etwa konstantes Probevolumen 52, welches in seinen Abmessungen in etwa durch die inneren Feldlinien 48 vorgegeben ist.

Auf den Verlauf der äußeren Feldlinien 50 zwischen der Ringelektrode 26 und dem Mischarm kommt es weiter nicht an; diese Feldlinien 50 erfüllen lediglich die Funktion, die inneren Feldlinien 48 in der gezeigten Weise geordnet und zusammengedrückt zu halten, weil sich gleiche Feldlinien abstoßen.

Es wird mit Hilfe des Strommeßgerätes 36 nur der Strom gemessen, der zwischen der Mittelelektrode 24 und der Oberfläche des Mischarmes 12 fließt, wobei der Stromkreis über den Schleifring und das Erdpotential geschlossen wird.

Über den gemessenen Strom läßt sich der elektrische Leitwert ermitteln, aus welchem wiederum eine Aussage über die Rußdispersion der Kautschukmischung abgeleitet werden kann.

Der Vorteil der Erfindung besteht darin, daß zur Durchführung der erwünschten Leitwertmessung am Rotor 14 selbst keine Änderungen vorgenommen werden müssen; es ist lediglich erforderlich, einen Schleifring an der Rotorachse 18 vorzusehen, um den Rotor insgesamt auf Erdpotential zu legen.

Ergänzend sei noch darauf hingewiesen, daß der Stromfluß während der Drehung des Rotors 14 nicht unterbrochen wird. Mit Hilfe einer besonderen Zeitschaltung innerhalb der Meßanordnung 46 wird jedoch erreicht, daß der Stromfluß nur dann von dem Strommeßgerät 36 gemessen wird, wenn die in Fig. 3 gezeigte Position vorliegt.

Zusätzlich zur Messung des elektrischen Leitwertes kann gleichzeitig auch noch eine Messung der Temperatur und des Druckes erfolgen. Für die Temperaturmessung ist gemäß Fig. 2 die Mittelelektrode 24 mit einer Innenbohrung versehen, in welcher sich am oberen Ende der Mittelelektrode 24 ein Thermoelement 54 befindet. Eine elektrische Leitung 58 führt zu einer nicht näher dargestellten Meßschaltung für die mit dem Thermoelement 54 ermittelte Temperatur.

Die Druckmessung erfolgt durch zwei Druckaufnehmer 60, 64, die innerhalb der Innenwand 12 angeordnet sind und mit dieser bündig abschließen. Über elektrische Leitungen 62 bzw. 66 sind die Druckaufnehmer 60, 64 mit nicht näher dargestellten und an sich bekannten Meßeinrichtungen für die Druckmessung verbunden.

Aufgrund der Bewegung des Rotors 14 werden an den Druckaufnehmern 60 und 64 unterschiedliche Drücke gemessen. Um den Druck der Kautschukmischung bzw. des Probevolumens im Bereich der Mittelelektrode 24 zu bestimmen, wird der Mittelwert der beiden gemessenen Drücke im Sinne einer linearen Interpolation herangezogen.

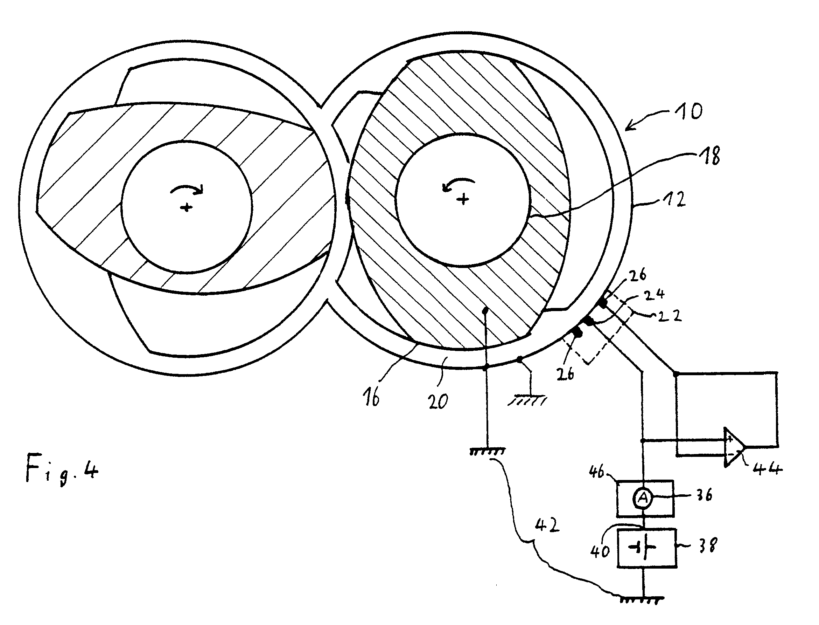

Fig. 4 zeigt einen Innenmischer entsprechend Fig. 1, jedoch mit zwei Rotoren.

## Ansprüche

1. Innenmischer zur Herstellung von Kautschukmischungen, insbesondere Innenmischer mit ineinander greifenden Rotoren, mit einer Meßanordnung zur Ermittlung des elektrischen Leitwertes eines Probevolumens der Ruß enthaltenden Kautschukmischung zwischen der mit einer Elektrode versehenen Innenwand des Innenmischers und dem Rotor, wobei die Meßanordnung eine Spannungsquelle, insbesondere eine Gleichspannungsquelle zur Erzeugung einer Gleichspannung zwischen einem ersten Potential, auf dem die Elektrode liegt, und einem zweiten Potential sowie ein Strommeßgerät zur Messung des durch das Probevolumen fließenden Stromes der Spannungsquelle, insbesondere der Gleichspannungsquelle umfaßt, dadurch gekennzeichnet , daß der gesamte, aus elektrisch leitendem Material bestehende Rotor (14) auf das zweite Potential (42) gelegt ist.

2. Innenmischer nach Anspruch 1, dadurch gekennzeichnet , daß die Achse (18) des Rotors (14) über einen Schleifring mit dem zweiten Potential (42) verbunden ist.

3. Innenmischer nach Anspruch 1 und/oder 2, dadurch gekennzeichnet , daß das zweite Potential (42) auf Erdpotential gelegt ist.

4. Innenmischer nach einem der vorhergehenden Ansprüche 1 - 3, dadurch gekennzeichnet , daß die in die Innenwand (12) eingelassene Elektrode (22) eine Mittelelektrode (24) und eine die Mittelelektrode (24) konzentrisch umgebende Ringelektrode (26) umfaßt, die durch einen inneren Isolierring (28) von der Mittelelektrode (24) isoliert ist.

5. Innenmischer nach Anspruch 4, dadurch gekennzeichnet , daß die Ringelektrode (26) von einem äußeren Isolierring (30) umgeben ist, der innerhalb eines Elektrodengehäuses (32) angeordnet ist, welches sich in einer Bohrung (34) in der Innenwand (12) befindet.

6. Innenmischer nach Anspruch 4 und/oder 5, dadurch gekennzeichnet , daß die Oberflächen der Mittelelektrode (24), der Ringelektrode (26) sowie der inneren und äußeren Isolierringe (28, 30) in der Ebene der Oberfläche der Innenwandung (12) des Innenmischers (10) verlaufen.

7. Innenmischer nach einem der vorhergehenden Ansprüche 1 - 6, dadurch gekennzeichnet , daß die Ringelektrode (26) auf das gleiche erste Potential (40) wie das Potential der Mittelelektrode (24) gelegt ist.

8. Innenmischer nach Anspruch 7, dadurch gekennzeichnet , daß der über die Mittelelektrode (24) fließende Strom zur Ermittlung des elektrischen Leitwertes der Kautschukmischung (20) herangezogen ist.

9. Innenmischer nach Anspruch 8, dadurch gekennzeichnet , daß der Rotor (14) mindestens einen sich radial erstreckenden und in Längsrichtung des Rotors (14) wendelförmig verlaufenden Mischarm (16) besitzt, und daß eine Auswertung des Stromes nur zu den Zeitpunkten erfolgt, an denen sich die Oberfläche des radialen Mischarmes (16) des Rotors (14) in einer Position gegenüber der Elektrode (22) der Innenwand (12) befindet.

10. Innenmischer nach einem der vorhergehenden Ansprüche 1 - 9, dadurch gekennzeichnet , daß der Innenmischer (10) mit einer Temperaturmeßeinrichtung (54) zur Messung der Temperatur der Kautschukmischung (20), insbesondere des Probevolumens, versehen ist.

11. Innenmischer nach Anspruch 10, dadurch gekennzeichnet , daß die Temperaturmeßeinrichtung durch ein Thermoelement (54) gebildet ist.

12. Innenmischer nach Anspruch 11, dadurch gekennzeichnet , daß das Thermoelement (54) in einer Innenbohrung (56) der Mittelelektrode (24) angeordnet ist und bündig mit der Oberfläche der Mittelelektrode (24) verläuft.

13. Innenmischer nach einem der vorhergehenden Ansprüche 1 - 12, dadurch gekennzeichnet , daß der Innenmischer (10) mit einer Druckmeßeinrichtung (60; 64) zur Messung des Druckes der Kautschukmischung (20), insbesondere des Probevolumens, versehen ist.

14. Innenmischer nach Anspruch 13, dadurch gekennzeichnet , daß die Druckmeßeinrichtung zwei Druckaufnehmer (60; 64) umfaßt, die benachbart zum Elektrodengehäuse (32) symmetrisch zur Mittelelektrode (24) angeordnet sind.

15. Innenmischer nach Anspruch 14, dadurch gekennzeichnet , daß die Druckaufnehmer (60; 64) in der Innenwand (12) des Innenmischers (10) bündig zur Oberfläche der Innenwand angeordnet sind.

Fig. 1

Fig. 2

Fig. 3

Fig. 4